# FASCICULE DE BREVET EUROPEEN

(11) **EP 1 241 038 B1**
(45) Date de publication et mention de la délivrance du brevet: **13.12.2006**
(21) Numéro de dépôt: 02290382.7
(22) Date de dépôt: 18.02.2002
(51) Int. Cl.: B60K 7/00, B60K 17/04, H02K 1/27

(54) **Elément d'entraînement tel qu'une roue motrice ou un treuil de levage, comportant un moteur synchrone**
Antriebsaggregat wie z. B. ein Antriebsrad oder eine Seilwinde, welches einen Synchronmotor enthält
Driving member such as driving wheel or hoisting winch containing a synchronous motor

(30) Priorité: 20.02.2001 FR 0102263; 20.04.2001 FR 0105412
(43) Date de publication de la demande: 18.09.2002
(73) Titulaire: MOTEURS LEROY-SOMER, 16000 Angouleme (FR)
(72) Inventeur: Gauthier, Pascal, 16290 Asnieres-sur-Nouere (FR)
(74) Mandataire: Tanty, François

(56) Documents cités:
- EP-A- 0 464 929
- EP-A- 0 872 943
- EP-A- 0 999 081
- EP-A- 1 001 507
- EP-A- 1 187 302
- DE-A- 3 826 933
- DE-A- 4 218 888
- DE-A- 19 732 637
- US-A- 669 699
- US-A- 5 091 668
- US-A- 5 633 544
- US-A- 5 841 212
- PATENT ABSTRACTS OF JAPAN & JP 2000 333407 A (AKATANI MASAMI)

## Description

La présente invention concerne un élément d'entraînement tel qu'une roue motrice pour chariots de manutention, notamment transpalettes ou analogues, ou tel qu'un treuil de levage.

Parmi les différents modes de motorisation des chariots de manutention, la roue motrice est le plus répandu.

Dans la majorité des cas, cette roue motrice est directionnelle, étant mobile en rotation autour d'un axe vertical.

Le diamètre de giration de la roue doit être le plus réduit possible, en particulier lorsque la roue motrice n'est pas centrale, afin notamment de permettre d'écarter au maximum la distance entre les roues du chariot et d'accroître sa stabilité.

Les constructeurs de chariots imposent fréquemment que le diamètre de giration soit celui du pneumatique de la roue.

Dans les roues motrices connues, la roue est entraînée en rotation au travers d'un réducteur par un moteur électrique de type à courant continu ou de type asynchrone, qui du fait de son encombrement doit être disposé au-dessus de la roue si l'on veut satisfaire aux exigences des constructeurs de chariots.

Il en résulte un encombrement vertical assez important et une structure relativement complexe.

Un problème d'encombrement similaire se pose pour les treuils de levage, dont le moteur entraîne un tambour.

On connaît par la demande de brevet EP-A-1 001 507 une machine électrique destinée à être implantée dans une roue de véhicule de tourisme, comportant un rotor à concentration de flux à aimants permanents.

On connaît par la demande de brevet EP-A2-1 187 302 opposable au titre de l'article 54(3) CBE, un moteur comportant un rotor à aimant permanent, les pôles nord et sud de ces aimants étant placés alternativement face au stator et le stator comportant des pôles principaux comportant chacun à leur extrémité face au rotor des dents.

On connaît par la demande de brevet DE 197 32 637 une roue motrice comportant un moteur asynchrone et un rotor à cage d'écureuil.

On connaît par la demande de brevet EP-0 999 081 une unité motrice comportant un moteur asynchrone.

On connaît par le brevet US 5 633 544 un élément d'entraînement selon le préambule de la revendication 1, notamment une roue motrice comportant un stator dont les dents comportent des épanouissements polaires, et un rotor comportant des aimants en surface.

La présente invention a pour objet de proposer un nouvel élément d'entraînement tel qu'une roue motrice ou un treuil de levage, présentant un encombrement réduit et une structure relativement simple.

Ce nouvel élément d'entraînement est décrit dans la revendication 1.

Par stator bobiné sur dents, on entend un stator dont chaque dent porte un bobinage qui lui est propre, à la différence des stators dont les enroulements sont enchevêtrés et qui présentent l'inconvénient d'avoir un encombrement axial plus important en raison de la longueur relativement grande des têtes de chignons, due au mode de bobinage. De plus, le nombre de dents n_{dents} est de préférence fonction du nombre de paires de pôles nₚₐᵢᵣₑₛ et du nombre de phases nₚₕₐₛₑₛ suivant la formule n_{dents} = nₚₐᵢᵣₑₛ * nₚₕₐₛₑₛ.

Se préférence le rotor est à concentration de flux, c'est-à-dire que les aimants sont disposés entre des pièces polaires. La combinaison d'un rotor à concentration de flux et d'un stator bobiné sur dents permet d'avoir une machine relativement puissante sous un faible encombrement, ce qui autorise notamment le montage du moteur en porte-à-faux à l'extrémité d'un arbre, entraînant une diminution du nombre de roulements. Le rotor peut tourner à une vitesse élevée, car les aimants sont protégés du flux pulsant par les pièces polaires. Il n'est donc pas nécessaire d'utiliser des aimants fragmentés aux grandes vitesses, comme c'est le cas avec les rotors dont les aimants sont montés en surface.

Les aimants du rotor présentent avantageusement une forme de coin lorsque la machine est observée selon l'axe de rotation du rotor, de largeur diminuant en éloignement de l'axe de rotation du rotor, et les pièces polaires présentent des découpes et sont engagées par ces dernières sur des nervures de l'arbre. Elles sont donc fixées sur l'arbre du rotor par complémentarité de formes. La coopération entre d'une part les aimants en forme de coin et d'autre part les pièces polaires reliées à l'arbre par complémentarité de formes est particulièrement avantageuse en ce que les aimants peuvent, aux vitesses élevées, exercer sur les pièces polaires des forces de compression qui tendent à s'opposer à l'écartement des régions des pièces polaires situées de part et d'autre des nervures sur lesquelles elles sont engagées. Il devient ainsi possible d'éviter d'avoir à engager les pièces polaires sur des barreaux, à la différence de ce qui est décrit dans le brevet US 5 091 668.

De plus, le fait de disposer les aimants entre des pièces polaires permet de les protéger des courants induits aux grandes vitesses de rotation, et donc d'éviter un échauffement susceptible de les démagnétiser.

Dans l'invention, le moteur qui est d'encombrement axial réduit peut être placé à l'intérieur d'une roue, d'un tambour ou d'une poulie, l'axe du rotor étant de préférence confondu avec l'axe de rotation de la roue, du tambour ou de la poulie. Dans le cas d'une roue motrice, le moteur n'a pas à être déporté vers le haut et l'encombrement de la roue motrice en hauteur est réduit, ce qui permet aux constructeurs de chariots de disposer d'un espace supplémentaire au-dessus de celle-ci.

L'invention permet également de simplifier la structure du réducteur éventuellement utilisé, lequel peut comporter un étage de réduction unique, et être à train épicycloïdal par exemple.

Le facteur de réduction peut être inférieur à quinze, être compris entre 7 et 12 par exemple, grâce à l'utilisation d'un rotor à aimants permanents et d'un stator bobiné sur dents, qui permettent de travailler en attraction et en répulsion, donc de générer un couple plus important qu'un moteur à réluctance qui ne travaille qu'en attraction.

Les dents du stator peuvent avantageusement recevoir des bobines individuelles présentant des têtes très courtes, ce qui permet d'obtenir un encombrement axial réduit. Les dents du stator sont alors de préférence dépourvues d'épanouissement polaires, ce qui facilite la mise en place des bobines sur les dents et leur enlèvement, en cas de besoin, pour procéder à un remplacement.

L'utilisation d'un stator bobiné sur dents est encore intéressante en ce qu'elle permet de réaliser le moteur avec un nombre relativement faible de dents et de bobines, donc à un coût avantageux. La masse des aimants utilisés peut également être relativement peu élevée, ce qui permet de diminuer le coût matière.

Selon l'invention, l'élément d'entraînement comporte un carter principal ayant une paroi tubulaire de grand diamètre, une paroi tubulaire de petit diamètre coaxiale à la précédente et une paroi transversale reliant lesdites parois tubulaires. Le stator est logé dans la paroi tubulaire de grand diamètre et cette dernière est solidaire d'une première pièce formant palier. La paroi tubulaire de petit diamètre est solidaire d'une deuxième pièce formant palier. De préférence, les parois tubulaires de grand et petit diamètres et la paroi transversale sont réalisées d'un seul tenant. En variante, la paroi tubulaire de grand diamètre peut être constituée par une pièce rapportée, la paroi tubulaire de petit diamètre et la paroi transversale étant réalisées d'un seul tenant.

La deuxième pièce formant palier constitue également un porte-satellites et comporte au moins un axe sur lequel tourne au moins un pignon satellite, de préférence trois pignons satellites, chaque pignon satellite engrenant d'une part avec un pignon taillé ou rapporté sur l'arbre du rotor et d'autre part avec une couronne d'un support. Cette couronne peut être rapportée sur le support ou être réalisée d'un seul tenant avec lui. Dans le cas d'une roue motrice, une jante supportant le pneumatique de la roue peut être fixée sur ce support.

Dans une réalisation particulière, l'élément d'entraînement comporte un roulement permettant au support de tourner sur la paroi tubulaire de petit diamètre du carter principal.

Toujours dans une réalisation particulière, l'élément d'entraînement comporte un capot rapporté de manière étanche sur le support. Ce capot peut servir à contenir une graisse ou huile de lubrification du réducteur.

De préférence, dans le cas d'une roue motrice ou d'un treuil, l'élément d'entraînement comporte un frein électromagnétique à manque de courant rapporté sur la première pièce formant palier, ce frein comportant un disque fixé sur une extrémité cannelée de l'arbre du rotor. Le carter principal peut être rotatif ou en variante être fixé directement sur le châssis, lorsque l'élément d'entraînement est une roue motrice et que la roue n'a pas à être directrice.

Comme expliqué plus haut, l'invention permet au rotor d'être coaxial au pneumatique de la roue ou au tambour et donc de réduire l'encombrement vertical de l'élément d'entraînement, le moteur n'ayant pas à être déporté.

L'invention a encore pour objet un chariot équipé d'au moins une roue motrice telle que définie plus haut, directrice ou non.

L'invention sera mieux comprise à la lecture de la description détaillée qui va suivre et à l'examen du dessin annexé, sur lequel :
- la figure 1 est une vue schématique en coupe axiale d'une roue motrice conforme à un exemple de réalisation, non limitatif, et
- la figure 2 représente isolément et schématiquement, en section transversale, le stator bobiné sur dents et, partiellement, le rotor.

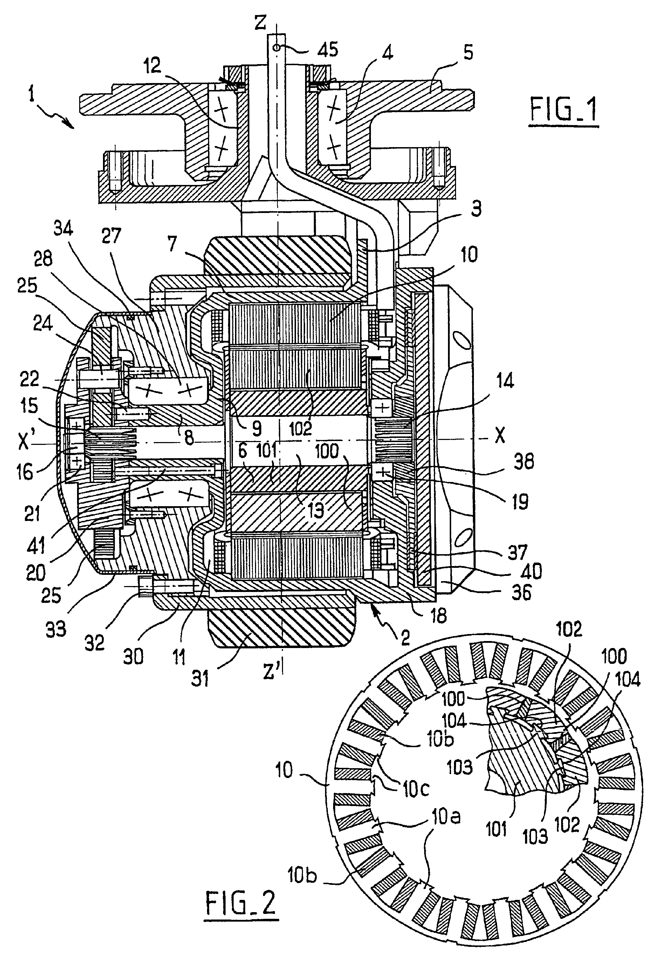

On a représenté sur la figure 1 une roue motrice 1 conforme à un exemple de mise en oeuvre de l'invention.

Cette roue motrice 1 comporte un moteur électrique 2, qui est, conformément à l'invention, du type synchrone, comportant un rotor 6 à aimants permanents, à concentration de flux, et un stator 10 bobiné sur dents, ce dernier étant représenté à la figure 2.

Chaque dent 10a porte un bobinage individuel 10b qui lui est propre. Le stator 10 comporte dans l'exemple décrit dix-huit dents, le rotor étant à douze pôles et le courant d'alimentation triphasé.

Chaque dent 10a est dépourvue d'épanouissement polaire, comme on peut le voir sur la figure 2.

Chaque dent peut comporter des encoches pour le montage d'une cale, non représentée, de maintien des bobines individuelles.

Le rotor 6 comporte des aimants permanents 100, d'aimantation transverse, disposés entre des pièces polaires 102 constituées chacune par un paquet de tôles magnétiques, de forme identique et superposées.

Les aimants 100 présentent chacun, lorsque observés selon l'axe de rotation du rotor, une forme générale en coin, de section transversale sensiblement trapézoïdale, de largeur diminuant en rapprochement du stator. Ces aimants 100 sont disposés radialement entre les pièces polaires 102. Ces dernières ne sont pas reliées entre elles magnétiquement, étant fixées sur un arbre amagnétique 101 par complémentarité de formes. L'arbre présente à cet effet des nervures axiales 103 et les pièces polaires des découpes 104 de forme correspondante. La forme en coin des aimants 100 permet un maintien efficace et simple sur le rotor. La fixation des pièces polaires par complémentarité de formes sur l'arbre permet de réaliser la liaison entre l'arbre et les pièces polaires de manière à autoriser l'emploi, pour fabriquer l'arbre, d'une matière amagnétique telle que de l'aluminium. D'autres matières peuvent être utilisées, comme par exemple un alliage d'aluminium ou une fonte amagnétique.

Chaque bobine individuelle 10b est formée par l'enroulement autour d'un axe géométrique d'enroulement de fils électriques qui peuvent présenter une section transversale rectangulaire, de grand côté parallèle à l'axe d'enroulement. En variante, des fils de section circulaire peuvent être utilisés.

Les bobines 10b sont excitées de manière à produire un champ tournant, afin d'entraîner le rotor.

La roue motrice comporte un carter principal 3 qui est monté rotatif sur un élément 5 solidaire du châssis du chariot par l'intermédiaire d'un axe creux 12 et d'un roulement 4, de manière à pouvoir tourner autour d'un d'axe Z - Z' vertical.

Dans une variante non illustrée, le carter principal 3 est fixé de manière non rotative sur le châssis du véhicule, la roue n'étant pas directrice.

Le carter principal 3 comporte une paroi tubulaire 7 de grand diamètre et une paroi tubulaire 8 de petit diamètre, réunies par une paroi transversale 9.

Dans l'exemple illustré, ces trois parois sont réalisées d'un seul tenant, mais en variante il pourrait en être différemment.

Le stator 10 du moteur est logé dans la paroi tubulaire 7 de grand diamètre, la paroi transversale 9 présentant une gorge annulaire 11 permettant de loger la partie en saillie des enroulements du stator.

L'arbre 13 du rotor comporte une extrémité 14 cannelée et une extrémité 15 pourvue d'un pignon taillé et d'un bout d'axe 16 cylindrique de révolution. En variante, ce pignon pourrait être rapporté sur l'arbre.

La paroi tubulaire de grand diamètre 7 est fixée à une pièce d'extrémité ou flasque formant palier 18, supportant un roulement 19 à l'intérieur duquel tourne la partie d'extrémité cannelée 14.

La paroi tubulaire 8 de petit diamètre du carter principal 3 est fixée au porte-satellites 20 au moyen de vis 41 et accouplée au porte-satellites 20 par tout moyen approprié, par exemple des goupilles 22. En variante, l'accouplement entre la paroi tubulaire 8 et le porte-satellites 20 peut se faire par complémentarité de formes, en réalisant des dents à l'extrémité de la paroi tubulaire et un logement de forme complémentaire sur le porte-satellites.

Le porte-satellites 20 porte un roulement 41 à l'intérieur duquel tourne le bout d'axe 16 du rotor.

Le porte-satellites supporte des axes 24 parallèles à l'axe X - X' de rotation du rotor, sur chacun desquels tourne un pignon satellite 25.

Dans l'exemple de réalisation décrit, la roue comporte trois pignons satellites 25, qui engrènent d'une part avec le pignon 15 taillé sur l'arbre 13 du rotor et d'autre part avec une couronne 27a appartenant à un support 27. La couronne 27a pourrait, en variante, être constituée par un élément rapporté.

Un roulement 28 est disposé entre la paroi tubulaire 8 de petit diamètre et le support 27, pour permettre à ce dernier de tourner autour de l'axe X - X'.

Une jante 30 portant un pneumatique 31 est fixée sur le support 27 au moyen de vis 32.

Un capot 33 est fixé de manière étanche sur le support 27.

Dans l'exemple de réalisation décrit, le support 27 présente à sa périphérie une surface cylindrique de révolution dans laquelle est réalisée une gorge annulaire logeant un joint torique 34, contre lequel vient s'appliquer le capot 33. L'étanchéité pourrait être obtenue différemment.

La roue 1 comporte, du côté opposé au réducteur à train épicycloïdal qui vient d'être décrit, un frein 36 à manque de courant, fixé sur la pièce 18 servant de palier.

Ce frein comporte un disque 37 pourvu d'un moyeu cannelé 38 qui vient en prise sur l'extrémité cannelée 14 du rotor, et de garnitures de freinage, de manière connue en soi.

Le frein comporte également un équipage mobile 40 qui est apte à s'appliquer contre le disque 37 en l'absence d'alimentation du moteur.

Les câbles 45 d'alimentation et de contrôle du moteur électrique s'étendent à l'intérieur de l'axe creux 12 articulé sur le châssis. En variante, la sortie des câbles peut se faire autrement.

La roue motrice 1 qui vient d'être décrite présente un encombrement axial inférieur au diamètre extérieur du pneumatique neuf ou voisin de celui-ci, ce qui permet de satisfaire aux exigences des constructeurs de chariots.

Le moteur est logé à l'intérieur de la roue, sans être déporté au-dessus du pneumatique, ce qui permet de disposer d'un espace supplémentaire sur le chariot.

Bien entendu, l'invention n'est pas limitée à l'exemple de réalisation qui vient d'être décrit.

En particulier, comme indiqué plus haut, le carter principal peut être fixé non rotatif sur le châssis du chariot.

On peut également ne pas utiliser de réducteur, auquel cas le moteur entraîne directement la roue.

On peut encore ne pas utiliser de frein, le freinage pouvant être effectué autrement, à l'aide du moteur par exemple.

Le réducteur peut bien entendu être modifié et l'on peut notamment changer le nombre de pignons satellites.

L'invention s'applique également à un treuil de levage, dans lequel le moteur entraîne un treuil ou une poulie.

## Revendications

1. Elément d'entraînement tel qu'une roue motrice pour chariot de manutention ou analogue ou tel qu'un treuil de levage, comportant une roue ou un tambour et un moteur électrique pour entraîner la roue ou le tambour en rotation, le moteur électrique étant un moteur synchrone comprenant un rotor (6) à aimants permanents (100) et un stator comportant un carter principal (3) comportant une paroi tubulaire (7) de grand diamètre et une paroi tubulaire (8) de petit diamètre reliées par une paroi transversale (9), le stator (10) étant logé dans la paroi tubulaire (7) de grand diamètre, cette dernière étant solidaire d'une première pièce formant palier (18), la paroi tubulaire de petit diamètre étant solidaire d'une deuxième pièce (20) formant palier, **caractérisé par le fait que** le stator est bobiné sur dents et **par le fait que** la deuxième pièce formant palier constitue également un porte-satellites et comporte au moins un axe (24) sur lequel tourne au moins un pignon satellite (25), de préférence trois pignons satellites, chaque pignon satellite (25) engrenant avec un pignon (15) taillé ou rapporté sur l'arbre du rotor et avec une couronne d'un support (27).

2. Elément d'entraînement selon la revendication 1, **caractérisé par le fait que** le rotor (6) est à concentration de flux et comporte des aimants (100) disposés entre des pièces polaires (102).

3. Elément d'entraînement selon la revendication 1, ne comportant qu'un seul étage de réduction.

4. Elément d'entraînement selon la revendication 3 le rapport de réduction étant inférieur ou égal à quinze, notamment compris entre 7 et 12.

5. Elément d'entraînement selon l'une quelconque des revendications précédentes **caractérisé par le fait qu'**une jante (30) supportant un pneumatique (31) est fixée sur le support (27).

6. Elément d'entraînement selon l'une quelconque des revendications précédentes **caractérisé par le fait que** le support (27) tourne par l'intermédiaire d'un roulement sur la paroi tubulaire (8) de petit diamètre du carter principal (3).

7. Elément d'entraînement selon l'une des revendications précédentes, **caractérisé par le fait qu'**il comporte un capot (33) rapporté de manière étanche sur le support (27).

8. Elément d'entraînement selon l'une quelconque des revendications précédentes, **caractérisé par le fait qu'**il comporte un frein électromagnétique (36) à manque de courant, rapporté sur ladite première pièce (18) formant palier, ce frein comportant un disque (37) fixé sur une extrémité cannelée (14) de l'arbre du moteur.

9. Elément d'entraînement selon l'une quelconque des revendications précédentes, **caractérisé par le fait que** le moteur entraîne une roue et **par le fait que** le carter principal (3) est rotatif autour d'un axe vertical (Z - Z').

10. Elément d'entraînement selon l'une quelconque des revendications précédentes, **caractérisé par le fait que** le moteur entraîne une roue et **par le fait que** le carter principal est fixé non rotatif sur le châssis du chariot.

11. Elément d'entraînement selon l'une quelconque des revendications précédentes, **caractérisé par le fait que** le moteur entraîne une roue et **par le fait que** le rotor est coaxial au pneumatique (31) de la roue

12. Elément d'entraînement selon l'une quelconque des revendications précédentes, **caractérisé par le fait que** les dents du stator sont dépourvues d'épanouissements polaires.

13. Chariot équipé d'un élément d'entraînement tel que défini dans l'une quelconque des revendications précédentes.

## Claims

1. A drive element such as a driving wheel for a goods-handling cart or the like, or such as a hoisting winch, the driving element comprising a wheel or a drum and an electric motor for rotating the wheel or the drum, the electric motor being a synchronous motor comprising a permanent-magnet rotor (6) and a stator comprising a main casing (3) comprising a large-diameter tubular wall (7) and a small-diameter tubular wall (8) interconnected by a transverse wall (9), the stator (10) being received in the large diameter wall (7), which wall is secured to a first bearing-forming piece (18), the small-diameter tubular wall being secured to a second bearing-forming piece (20), **characterized by** the fact that the stator us (10) comprises teeth and respective individual windings on said teeth, and by the fact that the second bearing-forming piece also constitutes a planet-carrier and has at least one pin (24) rotatably carrying at least one planet wheel (25), and preferably three planet wheels, each planet wheel (25) meshing with a gear (15) cut in or fitted to the rotor shaft, and also with a ring gear of a support (27).

2. A drive element according to claim 1, **characterized by** the fact that the rotor (6) is a flux-concentrating rotor and has magnets (100) disposed between pole pieces (102).

3. A drive element according to claim 1, comprising a single stepdown stage.

4. A drive element according to claim 3, the stepdown ratio being less than or equal to 15, in particular lying in the range 7 to 2.

5. A drive element according to any preceding claim, **characterized by** the fact that a rim (30) supporting a tire (31) is fixed to the support (27).

6. A drive element according to any preceding claim, **characterized by** the fact that the support (27) rotates via a bearing on the small-diameter tubular wall (8) of the main casing (3).

7. A drive element according to any preceding claim, **characterized by** the fact that it includes a cap (33) fitted in leaktight manner to the support (27).

8. A drive element according to any preceding claim, **characterized by** the fact that it includes an electromagnetic brake (36) that operates in the event of a power failure, the brake being fitted to said first bearing-forming teeth (18), and comprising a disk (37) fixed to a fluted end (14) of the motor shaft.

9. A drive element according to any preceding claim, **characterized by** the fact that the motor drives a wheel and by the fact that the main casing (3) is mounted to swivel about a vertical axis (Z-Z').

10. A drive element according to any preceding claim, **characterized by** the fact that the motor drives a wheel and by the fact that the main casing is fixed in non-swivel manner to the chassis of the cart.

11. A drive element according to any preceding claim, **characterized by** the fact that the motor drives a wheel, and by the fact that the rotor is coaxial with the tire (31) of the wheel.

12. A drive element according to any preceding claim, **characterized by** the fact that the teeth of the stator are deprived of pole shoes.

13. A cart fitted with a drive element as defined in any preceding claim.

## Patentansprüche

1. Antriebselement, etwa Antriebsrad für einen Transportwagen oder dergleichen oder für eine Seilwinde, mit einem Rad oder einer Trommel sowie einem Elektromotor zum Drehantrieb des Rades bzw. der Trommel, wobei der Elektromotor ein Synchronmotor ist, der einen Läufer (6) mit Dauermagneten (100) und einen Ständer aufweist, der ein Hauptgehäuse (3) mit einer rohrförmigen Wand (7) großen Durchmessers und einer mit dieser über eine Querwand (9) verbundenen rohrförmigen Wand (8) kleinen Durchmessers umfasst, wobei der Ständer (10) in die rohrförmigen Wand (7) großen Durchmessers eingebaut ist, an die ein erstes Lagerteil (18) angeformt ist, und wobei an die rohrförmige Wand kleinen Durchmessers ein zweites Lagerteil (20) angeformt ist,
**dadurch gekennzeichnet, dass** der Ständer auf Stege gewickelt ist und dass das zweite Lagerteil gleichzeitig einen Planetenträger bildet und mindestens eine Achse (24) aufweist, auf der sich mindestens ein Planetenrad (25) dreht, vorzugsweise drei Planetenräder drehen, wobei jedes Planetenrad (25) mit einem an die Läuferwelle angesetzten oder angeschnittenen Ritzel (15) und einem Zahnkranz eines Trägers (27) kämmt.

2. Antriebselement nach Anspruch 1, **dadurch gekennzeichnet, dass** der Läufer (6) zur Konzentration des Magnetflusses dient und zwischen Polstücken (102) angeordnete Magnete (100) trägt.

3. Antriebselement nach Anspruch 1 mit nur einer einzigen Untersetzungsstufe.

4. Antriebselement nach Anspruch 3, wobei das Untersetzungsverhältnis gleich oder kleiner als 15 ist und insbesondere zwischen 7 und 12 liegt.

5. Antriebselement nach einem der vorhergehenden Ansprüche, **dadurch gekennzeichnet, dass** an dem Träger (27) eine einen Reifen (31) tragende Felge (30) befestigt ist.

6. Antriebselement nach einem der vorhergehenden Ansprüche, **dadurch gekennzeichnet, dass** der Träger (27) über ein Wälzlager auf der rohrförmigen Wand (8) kleineren Durchmessers des Hauptgehäuses (3) läuft.

7. Antriebselement nach einem der vorhergehenden Ansprüche, **gekennzeichnet durch** eine auf den Träger (27) dicht aufgesetzte Kappe (33).

8. Antriebselement nach einem der vorhergehenden Ansprüche, **gekennzeichnet durch** eine an dem ersten Lagerteil (18) angebrachte, bei abgeschaltetem Strom ansprechende elektromagnetische Bremse (36), die eine an einem geriffelten Ende (14) der Motorwelle befestigte Scheibe (37) aufweist.

9. Antriebselement nach einem der vorhergehenden Ansprüche, **dadurch gekennzeichnet, dass** der Motor ein Rad treibt und das Hauptgehäuse (3) um eine vertikale Achse (Z-Z') drehbar ist.

10. Antriebselement nach einem der vorhergehenden Ansprüche, **dadurch gekennzeichnet, dass** der Motor ein Rad treibt und das Hauptgehäuse am Fahrgestell des Fördergerätes drehfest angebracht ist.

11. Antriebselement nach einem der vorhergehenden Ansprüche, **dadurch gekennzeichnet, dass** der Motor ein Rad treibt und der Läufer mit dem Reifen (31) des Rades koaxial ist.

12. Antriebselement nach einem der vorhergehenden Ansprüche, **dadurch gekennzeichnet, dass** die Ständerstäbe polschuhlos sind.

13. Mit einem Antriebselement nach einem der vorhergehenden Ansprüche ausgerüsteter Wagen.
